# EUROPEAN PATENT SPECIFICATION

(11) **EP 1 711 323 B1**
(45) Date of publication and mention of the grant of the patent: **21.04.2010**
(21) Application number: 05722685.4
(22) Date of filing: 01.02.2005
(51) Int. Cl.: B29B 17/02, B03B 5/28, B03B 9/06

(54) **A HYDROGRAVITY SYSTEM AND PROCESS FOR RECLAIMING A SOLID, MULTIPLE DOMAIN FEEDSTOCK**
HYDROSCHWERKRAFTSYSTEM UND -VERFAHREN ZUR RÜCKGEWINNUNG EINES FESTEN MEHRBEREICHSROHSTOFFES
SYSTEME ET PROCEDE FONCTIONNANT PAR HYDROGRAVITE ET DESTINES A RECUPERER UN FLUX DE MATIERES PREMIERES SOLIDES A DOMAINES MULTIPLES

(30) Priority: 06.02.2004 US 774158; 31.01.2005 US 47114
(43) Date of publication of application: 18.10.2006
(73) Proprietor: Broadview Group, LLC, Westlake, OH 44145 (US)
(72) Inventor: BORK, Joseph E., Westlake, OH 44145 (US); PASPEK, Stephen C., Jr., Broadview Heights, OH 44147 (US); SCHROEDER, Alan, Cleveland, OH 44102 (US); ENGEL, Ullrich, Michigan City, IN 46360 (US)
(74) Representative: Althaus, Arndt
(86) International application number: PCT/US2005/003308
(87) International publication number: WO 2005/077630

(56) References cited:
- EP-A- 0 304 667
- EP-A- 0 431 582
- EP-A- 1 225 019
- WO-A-02/085523
- DE-A1- 2 107 268
- DE-A1- 4 130 645
- US-A1- 2004 004 033
- US-B1- 6 460 788
- PATENT ABSTRACTS OF JAPAN vol. 018, no. 435 (M-1655), 15 August 1994 (1994-08-15) & JP 06 134762 A (HONDA MOTOR CO LTD; others: 01), 17 May 1994 (1994-05-17)

## Description

### FIELD OF THE INVENTION

The present invention relates to reclaiming one or more selective, different density solid components, such as plastic (e. g. polyvinylchloride, polyethylene), metal (e. g. copper, iron), etc. , which initially can be physically bonded to each other, from a multiple domain solid feedstock.

More specifically, the present invention relates to using binary hydrogravity separation of small sized particles of the solid multiple domain feedstock to selectively separate the particles into at least two different density components in a quiescent settling tank containing an aqueous solution having a specific gravity intermediate to one or more of the heaviest feedstock components or intermediate to one or more of the lightest thermoplastic feedstock components.

### BACKGROUND OF THE INVENTION

Heretofore, plastics have been selectively dissolved by certain solvents and separated from other plastics or non-plastic materials as by filtration. This format requires high temperatures, and potential problems with solvent vapors, and the like.

US 5,616,641 relates to a floatation separation process wherein in a flotation bath sufficient alkali metal salt or alkaline earth metal salt of a phosphate, a pyrophosphate, a metaphosphate or a polyphosphate is dissolved to provide a concentration greater than 1.0 grams per cubic centimeter and generally about 1.05 to about 1.6. g/cc. A particular salt is sodium dihydrogen phosphate. Preferably, the floatation process is employed to separate physical mixtures of plastic parts.

US2004/0 035 757 A1 describes a method for recycling polymeric materials that includes the use of separator tanks. After a mechanical separation step, a first density separation operation with flotation is achieved in a hydraulic separator, while a second step of density separation is achieved in a second separator. The flotation medium within the separators is water with the addition of clay or betonite, especially quarry clay, in order to increase the density of the water. Thus, a slurry based on water and clay, is used for separation.

WO 02/085 523 describes a process using a shredder for granulating waste material, a mixer for mixing the granulated material, single sink-float unit for separating a heavy and a light fraction from the granulated and mixed material, a shaking table for separating the metallic fraction and the plastic fraction within the heavy fraction and an optional second sink-float unit for further separating the plastic fraction.

EP 1 225 019 describes a plastic recycling process that includes two separating ponds. Each pond contains two inverted pyramid-shaped cavities that collect sinking materials while lighter materials float on the surface of the ponds.

US 6,460,788 describes a process of separating various types of polymeric materials from waste. A density separation is achieved by the use of multiple separators in sequence, but the liquid mediums within the tanks are having different densities from tank to tank. The preferred solution used contains clay which clay forms a slurry as process medium.

DE 2 107 268 A1 discloses the use of separator tanks in serious, but within each tank there are arranged means for keeping the particles to be separated in movement.

It is the object of the invention to provide a unique process for economically and efficiently separating various comminuted materials from one another. The present invention process and system shall particularly be well suited for the recovery of copper from cable and wire scrap, and also for recovery and separation of individual polymeric components present in the cable and wire scrap.

This object is achieved with the process according to claim 1 and the system according to claim 15.

Particular embodiments of the invention are the subject of the respective dependent claims.

The process and system as claimed in the independent claims and in the subclaims shall particularly be well suited for the recovery of copper from cable and wire scrap, and also for recovery and separation of individual polymeric components present in the cable and wire scrap.

### SUMMARY OF THE INVENTION

Articles and products which serve as feedstock and contain multiple domains such as layers or regions of two or more different solid components are reclaimed by a binary hydrogravity separation. Initially, the feedstock is granulated to reduce the size of the multiple components into small particles of substantially a single component, optionally screened to remove oversize particles and fibers, and washed to remove dirt. Optionally, but desirably, fines are removed. The particles are then slurried in a liquid and fed through a, dispersion mixer to a hydrogravity separation tank containing desirably a non-phosphorous aqueous solution, having a specific gravity which is intermediate to the specific gravity of one or more of the feedstock components whereby they are separated into feedstock components of a higher specific gravity or a lower specific gravity than the aqueous solution. A plurality of processing units each preferably containing a hydrogravity separation tank and a dispersion mixer to disperse agglomerated particles enable recycling, and subsequent reclaiming of selected component (s) in a substantially pure form. In a similar manner ; the various remaining components can be separated, recycled, and purified using different specific gravity solutions. Such a system is suitable for the separation of particles having different specific gravities.

### BRIEF DESCRIPTION OF THE DRAWINGS

FIG. 1 is a schematic flow diagram of one embodiment of a hydrogravity reclaiming system of the present invention containing different operation stages for removal and purification of solid components having different specific gravities;

FIG. 2 is a side elevation of a hydrogravity separation tank;

FIG. 3 is an end side elevation of the hydrogravity separation tank;

FIG. 4 is a cross-sectional view of a dispersion mixer which disperses agglomerated particles; and

FIG. 5 is a block diagram of an alternative embodiment for removing oversized and fine particles.

### DETAILED DESCRIPTION OF THE INVENTION

The system and process of the present invention for reclaiming individual thermoplastic components relate to a feedstock comprising solid, multiple domain or region components having different densities or specific gravities. One large class of components are various individual particles of plastics such as thermoplastic or thermoset polymers. The polymers can either be a homopolymer or a copolymer. While not desired, included within the plastic class are various melt blends of two or more compounds which contain multiple components on a molecular scale. Generally, feedstocks of the present invention contain less than about 10%, desirably less than about 5%, and preferably less than about 1% by weight of a melt blended material based upon the total weight of the feedstock. Non-plastic components include metals, inorganic fillers, various woods, paper, and the like. The multiple domain components are often in the form of layers, regions, areas, and the like.

Numerous feedstocks can be utilized provided that the components thereof when reduced in size to particles as by granulation, chopping, etc., have different specific gravities or densities. Desirably feedstocks contain at least two or three different plastics; at least one plastic and at least one metal; at least one plastic and at least one type of wood; or at least one plastic and at least one type of paper, and the like. Plastics generally encompass thermoplastic polymers and less desirably thermoset polymers as set forth hereinbelow.

Examples of specific thermoplastic polymers which can be separated include, but is not limited to, polyolefins such as polyethylene and polypropylene; styrenic polymers; acrylic polymers; polyvinyl esters such as polyvinyl acetate; polyvinyl alcohol; chlorine-containing polymers such as polyvinyl chloride and polyvinylidene chloride; various fluorocarbon polymers such as polytetrafluoroethylene, polyvinyl fluoride, and the like; nylons and other polyamides; polyesters; polyurethanes; polycarbonates; copolymers of the above, and the like.

Examples of specific thermoset polymers include various phenolic resins, various amino resins, various polyester resins, epoxy resins, various urethanes including urethane foams, various silicone resins, and the like including copolymers of various thermoset resins.

Other solid items which can be reclaimed by hydrogravity separation include metals such as iron, nickel, platium, platinum, silver, copper, gold, zinc, aluminum, tin, antimony, titanium, chrome, metal oxides, metal sulfides and other metallic compounds, and the like. Still other solid items include various types of wood including plywood, particle board, etc., various types of paper including cardboard, corrugated paper, and the like. Inorganic materials include silica oxides, metal carbonates, clay, limestone, alumina silicates, glass, and the like.

Examples of articles or products utilized as feedstocks in various embodiments of the invention include polymer insulated wire or cable including thermoplastics such as PVC, nylon, polyolefin, etc.; metal articles such as aluminum, copper, or steel and/or paper; sharps which include medical devices such as syringes, etc. which contain both plastic and metal components; plastic laminates or layered items; plastics items containing inorganic or other non-plastics; carpeting which has a foam backing of one polymer and fibers of another polymer; extrusion "bleeders"; recycled materials containing thermoplastics; vinyl-clad materials such as various window frames, door frames, and the like; automotive components including laminated or layered thermoplastic and/or thermoset parts such as trim, bumpers, paneling, multi-layer gaskets; automotive recycle shredded floss, i.e. components obtained after shredding an entire automobile; and the like. Other articles include various hoses which contain one or more layers, in any order, of a plastic such as PVC, nylon, polytetrafluoroethylene, polyolefin, and the like wherein the fibers can be made from polyester, nylon, and the like. Other items include plastic sprues from different molding operations; change over waste from conversion of one plastic to another plastic as in an extruder; molded items, cast plastics; etc., and various buckets or containers containing a combination of metal reinforcing parts or handles and paper, thermoplastic, and the like. Still other sources include windshield gaskets, molded parts, cast plastics, laminated rigid piping, and the like. Various laminates, or layered plastic including rigid plastics are also suitable as a feedstock.

In summary, generally any type of article can be utilized having more than one component which can be reduced to particles wherein the various components such as plastic, metal, paper, etc. can be readily separated as by grinding or granulation.

### OVERALL OPERATION

The overall reclaiming system and process include, but is not limited to, the following operation stages.

Granulation involves sizing the feed stock by cutting the same into suitable lengths and then breaking the same into sized particles of substantially separated domains, desirably screening, washing and/or air separating the particles to remove dirt, dust, grime and the like, and optionally screening the particles to remove fines which may hinder or inhibit subsequent operations.

A binary hydrogravity separation occurs in a quiescent tank preferably having steep angled walls generally greater than the angle of repose to prevent particle buildup thereon. The specific gravity of the aqueous solution, which is achieved by adding one or more salts, which include metal hydroxides, metal oxides, metal halides, metal sulfates, metal nitrates, metal nitrites, metal carbonates, and metal complexes, to water is selected to achieve the separation of one or more of the lightest feedstock components, or one or more of the heaviest feedstock components. Thus, an intermediate specific gravity can be selected so that granulated particles added to hydrogravity separation tank will be separated into one or more lighter components as well as one or more heavier components. Alternatively and often preferred, the specific gravity of the aqueous solution is slightly greater than the specific gravity of only the lightest solid component, or is slightly less than the specific gravity of the heaviest solid component which allows recovery of particles of substantially a single feedstock component. The component(s) selected to be reclaimed is desirably added to at least one additional gravity separation tank and then to preferably to a plurality of additional separation tanks (recycled) to further increase the yield and purify the selected, reclaimed component. Desirably both the top and bottom streams of at least an initial separation tank are recycled.

While the preferred embodiment of the present invention relates to an aqueous solution, it is never the less within the scope of the present invention to utilize non-aqueous solutions such as silicone solutions, oils including hydrocarbon and halo hydrocarbon oils, dry cleaning fluids, and even liquid solutions comprising ammonia or carbon dioxide. The solutions can be used "neat", in blends, or admixed with other chemicals for the purpose of altering their specific gravity. For example, the specific gravity of an aqueous solution of a specific hydrogravity tank can be changed or "dialed in" by adding thereto a second specific gravity solution having either a higher or lower specific gravity to achieve a different specific gravity in the tank or to fine tune an existing specific gravity.

Dispersion mixers are preferably utilized before each hydrogravity separation tank to sever, divide, and especially to break up agglomerated particles of the feedstock before they are added to a hydrogravity separation tank.

The selected separated particles from the last hydrogravity tank of a purification operation are collected, optionally washed, dried, and utilized for any desirable purpose such as reuse or resale. Optionally, additional purification processes such as melt filtration can be utilized to remove the last traces of contaminate from the particles.

In a similar manner, each remaining domain(s) or component(s) is selectively removed and purified.

### SYSTEM AND PROCESSING COMPONENTS

The present invention will now be described with respect to reclaiming one or more solid components from an article such as an insulated copper cable, it being understood that, as noted above, generally any article or product having multiple domains of different plastics or other components such as metal, wood, paper, etc., can serve as feedstock which is reclaimed with a high degree of purity.

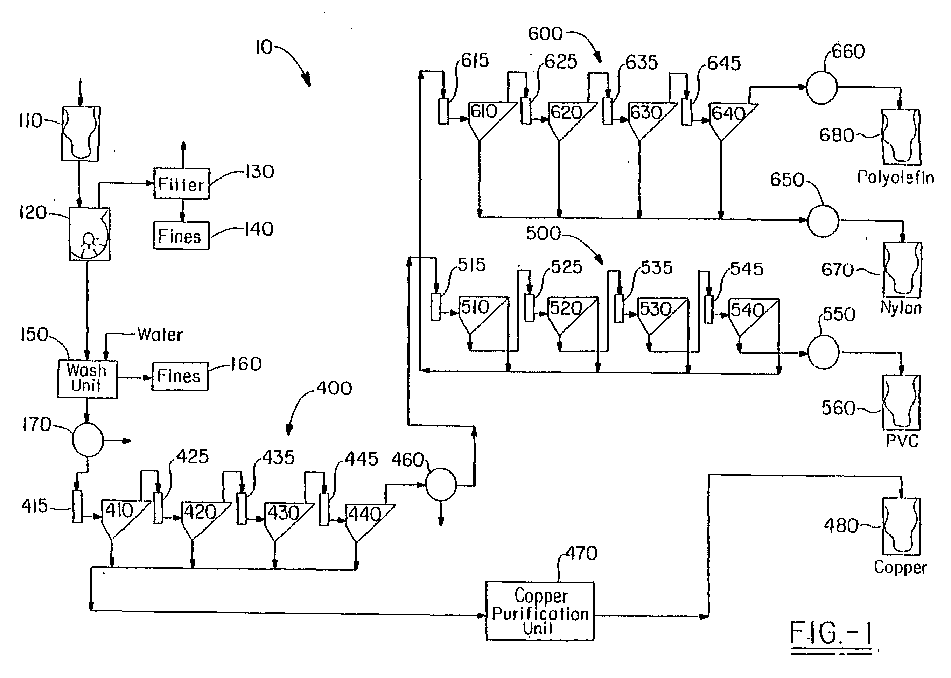

Referring to FIG. 1 , a hydrogravity system and process for reclaiming and purifying a solid feedstock is generally indicated by reference number 10. In one embodiment, the reclaimed article is a wire cable which contains a plurality of separated copper wires each surrounded with a thermoplastic such as polyethylene or other thermoplastic with the same being contained or encapsulated within an insulating thermoplastic such as polyvinyl chloride or other thermoplastic. The insulated cable has an outer jacket which is generally a thermoplastic nylon or other thermoplastic. In other embodiments, any number of components can be present.

The solid article, such as a copper cable is generally precut at an angle into lengths generally greater than 4 millimeters (mm) and fed from feedstock container 110 to granulator 120. Generally any type of cutting device or machine can be utilized with a reel type high shear cutting blade being desired.

The purpose of the granulator is to size, that is to break, chop, shred, etc. the precut lengths into particles of 4 mm or less and desirably from about 0.5 mm or about 1 mm to about 2 mm or about 3 mm or about 4 mm. The exact size desired is a function of the domain size in the feedstock materials and can be readily determined by one skilled in the art. The granulator reduces the feedstock containing layers of different domains, regions, etc., into small particles containing substantially only one domain or component, e.g. a specific thermoplastic or metal. That is, since the various layers, regions, etc., of the feedstock are only physically bonded, granulation of the same readily separates the various components to produce particles of substantially only a single component. Thus, the amount of any particles having two or more thermoplastic components therein is very small, generally less than about 5% by weight, desirably less than about 3% by weight, and preferably less than about 1 % by weight, or no percent by weight based upon the total weight of the feedstock. Granulators for producing metal and/or thermoplastic particles are well known to the art and to the literature and generally any suitable granulator 120 can be utilized such as a CMG, made in Italy. For reasons set forth below, fines are desirably removed and filtered or screened in unit 1 30 and collected in unit 140. Fine sized particles can vary but often are from about 0.1 to about 1.0 mm in size.

The dry granulated particles often contain dirt, grime, and fines and are thus fed to wash unit 150 wherein they are mixed under high agitation to create a suspension of the particles in water. Any type of high agitation mixing tank can be utilized with high shear agitation and/or turbulent flow being preferred. The washing step may be continuous or batch. The amount of the granulated article, such as thermoplastic and copper feedstock is desirably.such that the solids loading of the slurry in the wash unit is desirably from about 10% to about 40% by weight. Generally any soap such as laundry soap or any conventional surfactant, detergent, or wetting agent, known to the art and to the literature which is non-foaming or low foaming can be utilized and aids in wetting the granulated thermoplastic and copper particles.

The removal of fines from the particular article feedstock, while optionally, is often an important aspect of the present invention since otherwise, they generally clog the reclaiming system because they generally do not settle or float in the hydrogravity tanks but remain in suspension. Generally any conventional compounds or methods of removing the fines from the slurry can be utilized such as flocculating agents, coagulation agents, and the like which alter the zeta potential of the fines, centrifuging, air separation, sifting, or desirably screening. For example, a screen containing openings of generally less than about 1.0 mm and desirably less than about 0.5 mm can be utilized to permit the fines to fall there through. A vibrating screen or a centrifuging screen is preferred. In addition to the fines, dirt, and grime, the surfactant or soap solution also falls through the screen. A series of one or more spray bars can be utilized to spray a solution or water onto the retained material to aid in removing fines, dirt, grime, soap or detergent solution therefrom. The fines can be collected in container 160.

The washed thermoplastic and copper particles are substantially dewatered so when they are fed to a hydrogravity separator tank, dilution of the aqueous salt solution is prevented. Generally any type of drying process or apparatus 170 can be utilized with a mechanical or vibratory screen, basket centrifuge or a conventional spin dryer being preferred to remove the excess solution leaving a product having abut 0% or about 0.1% to about 15% and desirably from about 3% to about 7% by weight of solution.

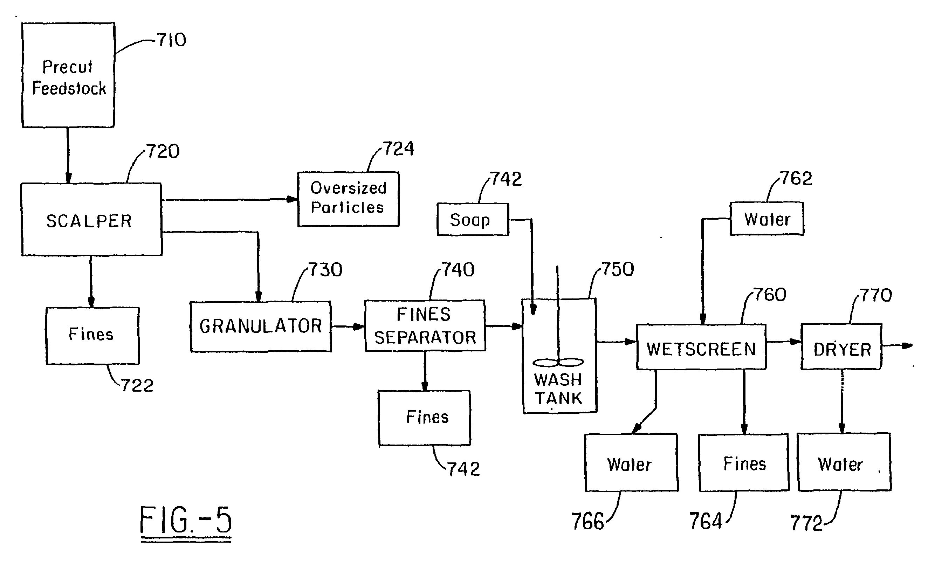

Another embodiment of the present invention with respect to granulating feedstock particles and removing fines therefrom is set forth in FIG. 5. Precut feedstock 710 is fed to scalper 720 which removes and feeds to container 724 oversized particles such as those generally larger than 4 mm, fibers, as well as angel hair which is generally strips or strings of fibers derived from paper, polymer, and the like. Fines fall through a fine size screen and are collected in container 722. The remaining precut feedstock is fed to granulator 730, which can be similar to that described above, wherein the feedstock is broken, chopped, shredded, etc. into small particles of from about 0.5 mm or about 1 mm to about 2 mm or about 3mm or about 4 mm. The granulator separates the dry feedstock containing different components into particles substantially containing only one component such as a specific type of thermoplastic or metal. Since fines are undesired because they can become suspended or entrained in the aqueous hydrogravity solution, they are removed by fine separator 740 which utilizes one or more fine screens to selectively remove fines and dirt and deliver the same to container 742.

The dry substantially single component particles are then subjected to a wet system which further removes fines and dirt. The water removal system comprise the various feedstock component particles which are fed to wash tank 750 generally having agitation therein, and contain soap, surfactants, wetting agents, etc., from tank 742. After the washing operation which may be batch or continuous, the wet feedstock particles are fed to wet screen operation 760 wherein water from tank 762 washes the particles to remove the soap or surfactant therefrom and is subsequently collected in container 766. The removed fines and dirt are fed to container 764. The various washed feedstock component particles which are semiwet are fed to any conventional dryer 770 such as a Gala dryer wherein water is removed to container 772. The dried multiple feedstock component particles can then be fed to any series of hydrogravity separation tanks to remove at least two components, for example at least two different thermoplastics, through a plurality of mixing and hydrogravity separation steps.

While specific embodiments have been described with regard to the removal of undesired components from the feedstock such as dirt, angel hair, oversized particles, and fines, it is to be understood that numerous different types of operations and other embodiments can be utilized and that the same are within the concepts of the present invention.

With respect to the embodiment of copper cable particles, although generally any type of feedstock can be utilized, in the various reclaiming stages a selected component is separated out such as a metal or copper in a first stage. The washed and granulated dewatered feedstock comprising different domain thermoplastic particles as well as copper particles is continuously fed preferably to a plurality of sequential hydrogravity separator tanks wherein the copper, or other non-thermoplastic materials is separated from the thermoplastic components. Desirably before each tank they are fed to a dispersion mixer for de-agglomeration and subsequently fed to the mid portion of a sequential hydrogravity tank. By mid portion it is meant from about 10% to about 90%, desirably from about 20% to about 80%, and preferably from about 30% to about 70% of the total aqueous solution height in the tank.

Another important aspect of the present invention in one embodiment is the utilization of an aqueous solution having a selected specific gravity which permits binary separation of one or more of the heaviest components to be separated out from the bottom of the hydrogravity tank. Alternatively, a specific gravity can be selected which permits one or more of the lightest components to float to the top of the tank and to be removed therefrom. As previously noted, the one or more selected solid component particles to be reclaimed are sequentially subjected to a plurality of hydrogravity tanks (recycled) having essentially the same specific gravity to obtain a high yield and purity of the selected components. Yet another important aspect is that the aqueous solution has a relatively low viscosity to allow ready separation of the desired component. The viscosity of the aqueous solution will vary depending upon the types of the particles, the size and shape thereof, and type of the one or more salts. A rule of thumb is that the viscosity is generally about 50 centiposes or less and desirably about 25 or less or about 10 centiposes or less.

Various specific gravity aqueous solutions are utilized which are known to the art and to the literature generally comprising salts that are highly soluble in water and thus create desired, predetermined specific gravities as low as about 1.001 or about 1.1 to as high as about 2.0 or about 3.0.

Suitable salts are capable of achieving a desired specific gravity for the particular operation stage, and produce a desired low viscosity. The salts or mixtures thereof are generally defined as ionic compounds containing an electropositive component and an electronegative component. Examples of positive components such as ions include alkali metals such as sodium and potassium, alkaline earth metal such as magnesium and calcium, and various transition metals (groups 3-15 of the periodic table) such as aluminum, tin, iron, zinc, and the like. The negative components such as ions include halogens such as chloride, bromide, oxygen or oxygen-containing compounds such as oxide, or hydroxide, or carbonate, nitrogen-containing compounds such as nitrate, sulfur containing compounds such as a sulfate, or the non-metal portion of a metal complex, and the like. Examples of specific suitable salts include potassium carbonate, zinc chloride, ferric chloride, ferrous chloride, calcium chloride, calcium bromide, calcium sulfate, zinc chloride, zinc bromide, zinc sulfate, zinc oxide, sodium chloride, sodium hydroxide, sodium zincate, magnesium chloride, various polytungstate complexes such as hydrated sodium heteropolytungstates, and mixtures thereof, with calcium chloride being preferred.

Another class of suitable aqueous specific gravity solutions are various drilling or completion fluids such as those generally utilized in well drilling. Such fluids are known the art and to the literature. An example of such drilling or completion fluids generally comprise water, a density increasing agent, and various stabilizers such as a clay stabilizing agent. Examples of such fluids are set forth in U.S. patent 4,536,297. Another class of suitable aqueous solutions are suspensions of various particles in water. Suspension can be a colloidal dispersion of particles, or obtained through the use of a dispersing aid, and the like. Suspended particles include magnetite such as Fe₃O₄, barite, shale, galena, clay, limestone, and the like. Such solutions are known to the literature and to the art such as set forth in U.S. Patent 5,240,626.

Saline solutions are desired but aqueous solutions containing a phosphorus atom such as various phosphates, pyrophosphates, metaphosphates, polyphosphates, or hydrides thereof are not desired and are avoided since they are not environmentally friendly and can lead to build up of algae and the like. In other words, the aqueous solutions of the present invention are generally phosphorus free meaning that the amount of any phosphorus containing salt is generally less than about 5% by weight, desirably less than about 3% by weight, and preferably less than 2% by weight or nil, that is no amount whatsoever, based upon the total weight of all salts in the aqueous specific gravity solution. It is noted that treated water such as that delivered by various municipalities, cities, and other water purification and treatment plants generally inherently contain small amounts of phosphorus salts which are generally less than 5% by weight.

A small amount of a soap, surfactant, detergent, wetting agent, or defoamer is desirably utilized to reduce surface tension, to hinder crystallization of the salt, to promote the release of air bubbles and to reduce the attraction between particles. Generally any conventional soap, surfactant, etc., can be utilized such as household soaps, laundry detergents, industrial detergents, and the like.

It has been unexpectedly found that the addition of surfactants, detergents and wetting agents to the aqueous solutions control surface tension and lower the freezing point thereof so that higher density or specific gravity solutions can be formed than otherwise possible. Depending upon the amount and type of surfactant, etc., the freezing point of a solution having a particular specific gravity can be depressed or reduced anywhere from about -17.72°C (0.1°F) to about -1.11°C (30°F); desirably from about -17.22°C (1.0°F) to about -3.89°C (25°F); and preferably from about -16.67°C (2.0°F) or about -16.11°C (3.0°F) or about -15°C (5.0°F) to about -12.22°C (10°F) or about -9.44°C (15°F), or about -6.67°C (20°F).

Surfactants can generally be anionic, cationic, nonionic, amphoteric, and the like and the same are known to the art and to the literature. Examples of suitable cationic surfactants include the various quaternary amines such as a quaternary ammonium salt having four alkyl and/or aryl bonds connected to the nitrogen atom wherein, independently, each hydrocarbon or functional containing hydrocarbon group has from 1 to 100 carbon atoms. Examples of suitable quaternary ammonium salts are known to the art and to the literature. Examples of other surfactants are set forth in 2003 McCutheon's Volume 1: Emulsifiers & Detergents (The Manufacturing Confectioner Publishing Company; Glen Rock, NJ) which is hereby fully incorporated by reference. Whether a surfactant is suitable or not can be readily determined by adding various amounts to the aqueous solution containing particles of the various components and determining whether the particles are wetted out. Anionic surfactants ordinarily comprise alkyl hydrophobic hydrocarbon chains having terminal anionic hydrophilic polar groups such as carboxylate, sulfonate, sulfate, phosphonate and phosphate polar groups. The alkyl can contain from about 2 to about 24 carbon atoms and desirably from about 8 to about 20 carbon atoms. Suitable surfactants comprise fatty acid chains containing about 10 to about 20 carbon atoms and may contain one or more double bonds, if desired, as in naturally occurring fatty acid vegetable oils. Carboxylate surfactants ordinarily comprise alkyl hydrocarbon hydrophobic chains whereas sulfonate surfactants comprise alkyl, aryl, or alkyl-aryl hydrophobic chains which may contain double bonds, ester or amide groups.

Desired surfactants include the following: Sodium Caprylamphopropionate (Miranol JEM), Sodium 2-ethylhexyl sulfate (Rhodapon BOS, Sulfotex OA), sodium octyl sulfate (Standapol LF), Sultech 2113, Disodium Cocoamphodiacetate (Mackam 75/2C), Disodium Capryloamphodipropionate (Mackam 2CYSF), Cocamidopropyl Hydroxysultaine (Mackam CBS 50), Sodium Capryloamphohydroxypropylsufonate (Mackam JS), Caprylamidopropyl Betaine (Mackam OAB, DV 6836), methyl ester soybean oil (Septosol SB-D), Diphenylene Oxide Disulfonate (Rhodacal DSB), Lauraminopropionic Acid (Deriphat 151C), alkylpolyglucosides (Glucopon 425), Sodium laurylether sulfate (SLES), Octylamine Oxide (Mackamine C-8), octyl betaine (Mackam BW 139), Sodium Alkyl Naphthalene Sulfonate (Petro ULF), linear alkylbenzene sulfonates (Biosoft S-101), Lauramine Oxide, alkylamine oxides (AO 728), alkylether sulfonates (Avanel S-74), anionic and nonionic fluorosurfactants such as the various Zonyl surfactants made by DuPont, (e.g. Zonyl FS-62, FSA, FSP, FSE, FS-62, 9361, FSH, FSO, FSN, etc.), cationic/nonionic surfactant blends (Burcoterge CSB), alkylpolyglucosides (AG 6202), tall oil based amides (Burcoimidozoline), propoxylated and ethoxylated fatty acids (Burcoterge LFE 1000), modified ethoxylated carboxylates (Deterge LF 7315), phosphated amphoterics (Deteric CSP), ethoxylated complex amines (Deterge AT 100), diphenyl sulfonate derivatives (Dowfax 8390), phosphate esters (Colatrope 555, Colafax 3373 PE, Colafax 3371 PE), alkylether hydroxysultaines (Mirataine ASC), anionic proprietary blends (Colonial ZF 20), diphenyl sulfonate derivatives (Surfedon LP 300), organic phosphated amphoteric (Deteric CSP), salts of N-lauryl beta iminodiproprianate (Deriphat 160C), iminodipropionate amphoteric (Amphoteric 400), proprietary hydrotropes (Monatrope 1250), Cocamide DEA (Ninol 40-CO) and dodecylbenzene sulfonic acid (Biosoft S 101), wherein the number of carbon atoms in any alkyl group is as noted above.

Another compound which has been found to promote particle dispersion in an aqueous system is various defoamers which are known to the art and to the literature. Examples of suitable defoamers include compounds containing amorphous silica, various siloxanes such as polydimethyl siloxane, and the like such as Dow Corning 200, 1430, 1520, etc.

The amount of such surfactants, detergents, wetting agents, defoamers, etc., generally varies with the strength of the surfactant, etc., and/or the chemical nature of the aqueous solution, and/or according to specific gravity desired and/or the amount of freezing point depression desired with generally greater proportional amounts yielding a higher specific gravity and/or a larger freezing point depression.

The hydrogravity separation tank is designed to promote good separation of the multiple domain thermoplastic feedstocks after it is granulated. As a general concept of the present invention, one or more of the heaviest components are removed from the bottom of the hydrogravity separation tank as a slurry, and one or more of the lightest particles float to the top of the tank and are removed or skimmed off, desirably with both the top and bottom each being separately recycled to produce purified components. The specific gravity of the solution in the tank is thus generally intermediate of the one or more heaviest and the one or more lightest density particles. Accordingly, the specific gravity of the solution is at least about 0.02 or at least about 0.05 lighter or heavier and preferably at least about 0.10 or at least about 0.15 lighter or heavier specific gravity units than the specific gravity of any selected component particles. Preferably, in any given stage of the reclaiming operation, only a single heaviest particle component is substantially removed from the bottom or only a single lightest particle component is removed from the top of the separation tank with the remaining particles being removed from the opposite end of the tank.

An essential aspect of the hydrogravity tanks is that they have a non turbulent or slow flow rate such that the tank effectively separates particles of the heaviest component(s) or separates particles of the lightest component(s) from the remainder of the solution. Accordingly, the separation tanks are not agitated, stirred, mixed, or the like. Such a quiescent tank has sides and bottom surfaces which are greater than the angle of repose of the particles thus eliminating and preventing build up thereof. The angle of repose of the various sides will vary with the physical and chemical properties of the solution, the types of components such as plastic or metal, the shape of the particles, and the like. However, such angles of repose can be readily determined by one skilled in the art. Generally, any side surface or wall of the tank has an angle A or B of at least 45 degrees from the horizon. The angle of the various sides is generally at least 1 degree greater, desirably at least 5 degrees greater, and preferably at least about 10 degrees greater than the angle of repose.

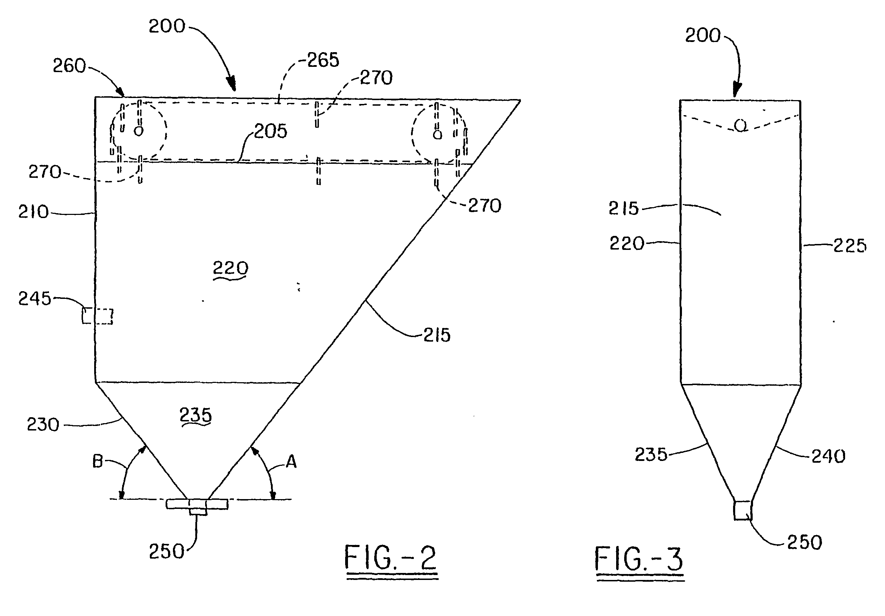

As long as the above requirements are met, numerous tank designs and configurations exist. One such configuration of a generalized tank of the present invention is set forth in FIG. 2 wherein tank 200 has a top 205, a vertical upper first end wall 210, an inclined upper second end wall 215, and as shown in FIG. 3, generally vertical upper first and second side walls 220 and 225 respectively. The upper first end wall 210 of the upper portion of the tank extends into inclined lower first end wall 230. As shown in FIG. 3, the upper first side wall 220 also merges into an inclined lower first side wall 235 and the same is true of upper second side wall 225 which merges into inclined lower second side wall 240, all of which are greater than the angle of repose.

Utilization of the above described hydrogravity separation tank of FIG. 2 thus permits the washed and dewatered particles from dryer 170 to be fed through tank inlet 245 to tank 200 and subsequently separated into components, such as at least one component which is discharged as a slurry from the tank bottom egress 250. The aperature size of egress 250 is sufficient to maintain a fairly constant and continuous removal and can be readily controlled by any conventional valve, with a pitch valve being preferred. The aperature size is also such that a sufficient particle residence time exists in the hydrogravity tank to permit efficient separation of the one or more heavier components and to achieve an aqueous slurry velocity flow which avoids back mixing, entrainment, and the like.

As shown in FIG. 2, hydrogravity separation tank 200 in one embodiment optionally can contain skimmer 260 which comprises a conveyor type belt 265 having paddles 270 dependent therefrom. Rotation of conveyor 265 will cause the paddle to be immersed into the top of the aqueous slurry and skim the floating particles to one edge of the tank where they are collected and transferred to mixing apparatus 300. Otherwise, the floating particles can simply flow through an outlet opening, weir or other types of removal devices known to the art and to the literature to the next stage of the system or process.

According to the concepts of the present invention, separation and purification of granulated solids of different components, e.g. plastic, metal, is conducted as opposed to purification of a solution. In order to obtain a high yield and purity of any specific particles of one or more components, such selected particles are feed to a plurality or multiple of subsequent hydrogravity separation tanks wherein the removal operation is repeated with the selective component particles being reclaimed being transferred to all the tanks in one operation stage. The number of such sequential hydrogravity tanks in any operation stage can vary from at least 2 to about 10, desirably from about 3 to about 8, and preferably from about 3 to about 5 until the selected component(s) are highly purified. Naturally, the specific gravity of the aqueous solutions in any plurality of hydrogravity separation tanks of any single operation stage is substantially the same.

Inasmuch as the various granulated particles upon immersion into an aqueous solution may or will tend to agglomerate due to surface tension or electrostatic attraction, it is preferred to utilize a dispersion mixer before each separation tank to disperse, sever, etc., such agglomerated particles. Alternatively, in a series of purification or recycling steps as shown in FIG. 1 with regard to separation and purification of the polyolefin, the nylon, the PVC, and the copper, at least one dispersion mixer is utilized per about 2 to about 10 total hydrogravity tanks or, some dispersion mixers can be utilized, that is from about 1 5% to about 30%, per total number of separation tanks. Desirably a majority, that is greater than 50%, of mixers are utilized and more desirably, a substantial number, that is from about 70% to about 95%, of dispersion mixers per total number of hydrogravity separation tanks in any recycling purification stream.

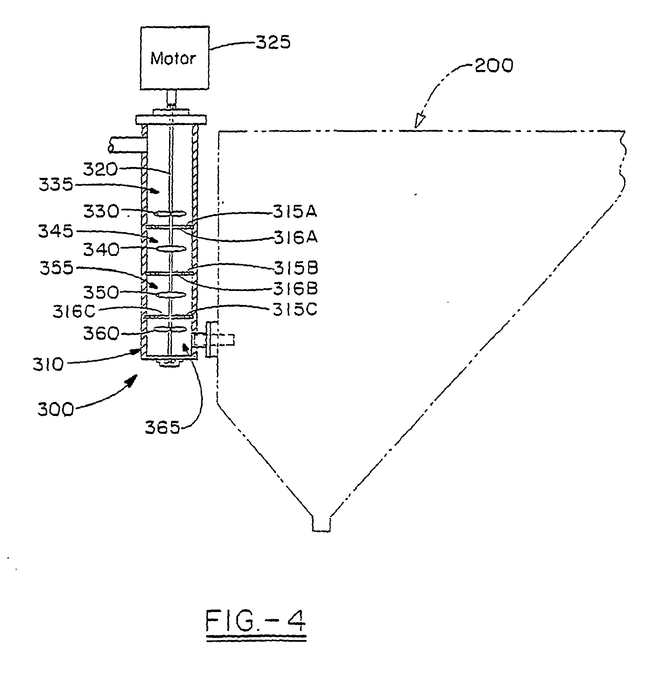

A dispersion mixer 300 shown in FIG. 4 is preferably located before the first hydrogravity tank of the first removal stage and desirably also before every hydrogravity tank therein. The same principle is true with respect to the other removal stages of other component particles. Although dispersion mixer 300 can be a batch mixer, it is highly preferred that a continuous flow mixer be utilized. The dispersion mixer can be of any shape but desirably is elongated and can have one or more mixing zones, with a plurality of zones, such as from about 2 to about 10, and from about 3 to about 5 zones being preferred. Desirably dispersion mixer 300 is in the shape of an elongated tube or cylinder 310 and has a zone separation element such as an annulus 315 located between and defining each zone. Annulus apertures 316A, 316B and 316C can vary from zone to zone so long as it is less than the tube diameter with a desired aperature area of from about 10% to about 50% and preferably from about 15% to about 30% or about 35% of the total tube diameter area. The linear location of each zone separation annulus 31 5 can vary so that each zone can be of any desirable length and each zone length need not be the same. The zone length to diameter ratio can be of from about 0.5 or about 0.8 to about 5 or about 10.

One or more shafts can be utilized to rotate a mixing impeller, with one axial shaft 320 being preferred, which extends through mixer 300 and can be rotated by any conventional apparatus such as motor 325. Generally two types of mixing impellers are utilized. The first is an axial mixing impeller 330, located in axial flow zone 335, which sucks in and propels the granulated component particles into the mixer. One or more mixing impellers can be contained in any zone. Any conventional impeller can be utilized in the first or ingress zone such as a marine propeller having two or more blades, or any other substantially axial flow generating impeller.

The aqueous solution containing the granulated particles therein is then forced through first annulus 315A, and into first radial flow zone 345 which contains a second type of mixing impeller, one or more radial flow dispersion impellers 340 designed to break up substantially any particles which have agglomerated. It is essential that the radial flow dispersion impeller create high shear and/or high turbulence to separate the agglomerated particles. Such impeller dispersion blades are more functional than a simple impeller inasmuch as the dispersion blades create a hydraulic action which tears agglomerated particles apart and disperses them uniformly throughout the solution. This is believed to be achieved by two different mechanisms. In the first, agglomerated particles hitting the blade are broken apart (sheared) and then in the intense turbulence surrounding the blade, particles hit one another at high speeds and are further broken up. This intense turbulence around the blade generally occurs at a zone extending a couple of inches outward therefrom and is called the zone of attrition. Beyond the turbulent zone the various particles are thoroughly mixed and dispersed. The diameter of the high sheer and/or turbulent impeller 340 can vary in length but is generally from about 20% to about 50% and desirably from about 25% or about 30% to about 35% or about 40% of the dispersion mixer diameter. Various types of radial dispersion impeller blades are known to the art and to the literature and can be utilized such as a Cowles^{®} impeller, a Hockmeyer impeller, a so-called "high vane blade", and also a combination of a blade imparting both radial and axial flow.

In a preferred embodiment of the present invention, the slurry solution is fed from first radial flow zone 345 through second zone separation annulus 315B to a second radial flow zone 355 having a dispersion impeller 350 which further breaks up the agglomerated particles, etc., and further disperses the same into individual particles. The mechanisms are the same as with regard to first radial flow zone 345 and hence will not be repeated.

In a preferred embodiment, the aqueous slurry flows through third zone separation annulus 31 5C into a fourth zone, which is a second axial flow zone 365 containing one or two axial flow impeller 360. The axial flow impeller is desirably the same as axial flow impeller 330 and the same, along with the various other aspects of axial flow zone 365, will not be repeated but rather incorporated by reference with respect to the first axial flow zone 335. Of course, axial flow zone 365 serves to suck the aqueous slurry from radial zone 355 into axial zone 365 and then expel it as through an egress in the mixer to a pipe or conduit leading to a subsequent hydrogravity separation tank and preferably to a mid-portion side inlet thereof.

The rpm of rotating shaft 320 can vary considerably depending upon desired throughput or flow rate but generally is from about 500 to about 5,000 and preferably from about 1,700 or about 2,500 to about 3,500 rpm. The flow rate through mixer 300 will generally vary with the tube diameter as well as the diameter of apertures 316A, 316B, and 316C and can be from about 3.78 to about 189.2 l/min (1 to about 50), desirably from about 37.8 to about 170.3 l/min (10 to about 45), and preferably from about 75.7 to about 151.4 l/min (20 to about 40 gallons per minute) with respect to a dispersion mixer having a 25.4 cm (10 inch) diameter.

While a specific dispersion mixer has been described in detail, it is to be understood that many variations thereof as well as other mixers can be utilized so long as they generally contain at least one and preferably a plurality of dispersion zones which serve to further break up the particles as through high shear and turbulence. For example, a dispersion mixer can contain an inlet pump and/or an outlet pump in lieu of an impeller. Moreover, in the radial flow zones, high turbulence pumps can be utilized or a pump can be run backwards to produce high turbulence and/or shear.

### HYDROGRAVITY SEPARATION

The hydrogravity separation of a specific wire cable feed stock will now be discussed in view of the above principles, concepts, structures, and descriptions. As noted above, the wire cable comprises a plurality of copper wires each surrounded with a polyethylene thermoplastic with the same being encapsulated in polyvinyl chloride thermoplastic insulation. The outer jacket of the insulated cable is a nylon thermoplastic. In the preferred separation embodiment, only one component is separated (recycled) in each stage or operation with the remaining components to be purified transferred to the next stage.

The granulated, washed, and dewatered feedstock is fed to first dispersion mixer 415 which, is described herein above, the description, concepts, principles, etc. which are hereby incorporated by reference, contains a plurality of zones having a first axial flow zone, a first radial dispersion zone wherein a dispersion impeller breaks up agglomerated particles as by high shear and/or turbulence, a second radial dispersion zone followed by an axial output zone. The dispersed particles are then fed to a mid or lower portion of a first hydrogravity separation tank 410, the description, concepts, principles, etc., of which as set forth herein above such as with regard to tank 200 are hereby fully incorporated by reference. The specific gravity of the calcium chloride aqueous solution in tank 410, and all subsequent sequential tanks 420, 430 and 440, is about 1.40 to about 1.50 which is greater than all of the thermoplastic components but less than that of the copper component. The viscosity of the calcium chloride aqueous solution is low, for example less than about 10 centipose. The sides of tank 410 have an angle sufficient to prevent buildup of any copper solids and the flow rate throughout the tank is slow and generally free of any turbulence so that quiescent separation is achieved. That is, generally there is a small velocity component in the horizontal direction with a greater velocity flow component in either vertical direction. After a desired residence time to permit good specific gravity separation, the copper-rich particles or stream are emitted from the bottom of tank 410 in the form of a slurry which is transferred to conventional purification unit 470. Any conventional purification unit can be utilized such as a concentrating table, e.g. a Deister or a Wilfley table, generally of a rectangular shape and tilted towards one corner so the copper particles are directed thereto and collected. The remaining thermoplastic domain particles of nylon, PVC and polyethylene either flow out of the top of the tank as through a weir or are skimmed off and fed to second dispersion mixer 425. The second dispersion mixer is desirably the same as the first mixer and thus has two radial flow zones for breaking up and separating various agglomerated particles which are primarily a thermoplastic. The various thermoplastic component particles are then fed to a second hydrogravity separation tank 420, and desirably to a middle or lower portion side inlet thereof.

Tank 420 preferably contains the same specific gravity aqueous solution as first separation tank 410 and in all aspects is desirably the same as first tank 410. In other words, the structure, flow, etc., can be a duplicate of the first hydrogravity separation tank. Thus, additional settled copper particles from the bottom of tank 420 are fed to purification unit 470 and the remaining floating particles are either skimmed or flow to third dispersion mixer 435 which is desirably the same as first dispersion mixer 415 and has multiple axial mixing zones, and multiple dispersion zones which further break up agglomerates.

In a similar manner, the system and process can be repeated any number of desirable times until essentially all of the copper component has been removed from the hydrogravity separation tanks which all contain essentially the same structure and conditions as well as the same specific gravity aqueous solution as first tank 410, with the remaining thermoplastic particles being removed from the top of the tank and passed through a mixer having the same structure and conditions as first dispersion mixer 415 and then transferred to a succeeding tank. In the embodiment shown in FIG. 1, a total of four tanks are utilized including third hydrogravity separation tank 430, fourth dispersion mixer 445, and fourth hydrogravity separation tank 440.

The specific gravity solutions in any unit operation or stage purification of particles of a selective feedstock component are stored so that they can be subsequently reused or recycled. Thus, after use of a long period of time such as a week, a few weeks, a month, or several months, any specific gravity solution utilize in any purification stage of purification of various feedstock components can be cleansed as by filtration or clarification, and subsequently stored in the tank until needed and then reused.

In accordance with the concepts of the present invention, inasmuch as only copper was removed from the first operation stage, the remaining thermoplastic components are purified in that they are subjected to a plurality of dispersion mixers and hydrogravity separation tanks and contain very little, if any, remaining copper particles therein.

After the last tank or mixer of the copper separation stage, the aqueous slurry is fed to dewaterer 460 to remove the high specific gravity aqueous solution from the plastic particles and the solution returned to tank 410 (not shown) so that no significant amount thereof is sent to the second purification or operation stage which would alter the specific gravity of the subsequent stage and potentially have a detrimental effect thereon. Generally any conventional dryer or dewaterer 460 can be utilized such as a vibration screen, or a centrifuge dryer, with a spin dryer such as a Gala 301 6 dryer manufactured by Gala Corporation being suitable.

The utilization of the above system and process with regard to a copper cable can result in a yield of generally at least 90%, desirably at least about 95% and preferably at least about 98% or about 99% percent by weight from copper purification unit 470 based upon the total weight of copper added to first separation tank 410. The purity of copper from purification unit 470, which separates thermoplastic particles from the copper, is generally at least about 80%, desirably at least about 90%, and preferably at least about 95% or at least about 98% by weight based upon the total weight of material collected.

Considering the second operation stage of the system and process of the present invention, the purified thermoplastic particles obtained from the first stage or operation are fed to a plurality of a dispersion mixer and subsequent hydrogravity separation tank units desirably in accordance with the concepts, principles, structure and the description set forth hereinabove and for the sake of brevity will not be repeated. However, the same is hereby fully incorporated by reference with regard to all aspects thereon such as to the structure, shape, flow conditions of the various hydrogravity tanks, the type of dispersion mixers which utilize a plurality of zones having at least one axial flow zone and at least radial dispersion zone.

In the second operation stage of the reclaiming system and process, PVC is purified by collecting it from the bottom of each tank and feeding it to a sequence of dispersion mixers and hydrogravity separation tanks (i.e. recycled). Any remaining domain thermoplastics such as polyethylene and nylon float to the top and are removed from each tank.

With respect to the three thermoplastic components derived from a copper cable, the PVC component has the highest specific gravity with nylon having a lower specific gravity and polyethylene the lowest. Accordingly, the specific gravity of each tank within the second operation stage is approximately the same and is about 1.15 to about 1.2 which is slightly lighter than the PVC but heavier than the polyethylene and the nylon. The thermoplastic particles from the dewaterer 460 are thus fed to dispersion mixer 515 where they pass through different mixing zones separated by an annulus and are subjected to a dispersion impeller whereby an agglomerates of any of the three thermoplastic components are substantially broken into separate and individual thermoplastic particles. The thermoplastic particles are then fed to quiescent hydrogravity tank 510 which have walls of non-repose and non-turbulent flow conditions with adequate residence times such that the various particles can separate from one another and subsequently the lighter polyethylene and nylon are collected from the top of tank 510 and directly fed to the third operation stage. The polyvinyl chloride particles are collected from the bottom of first tank 510, fed to second dispersion mixer 525 where they pass through different mixing zones and are subjected to a dispersion impeller whereby any agglomerates are substantially broken into individual thermoplastic particles. The particles are then fed generally to the middle portion of second hydrogravity tank 520 wherein the separation (recycling) process is repeated. Thus, the lighter polyethylene and nylon particles float to the top and flow out of or are skimmed off the top of second tank 520 are then directly fed to the third operation stage. Any remaining PVC particles settle out of the bottom of second tank 520 and are fed to third dispersion mixer 535, and then to third hydrogravity tank 530 for further separation. Once again, in a manner as described hereinabove, the polyethylene and nylon particles are separated and collected from the top of tank 530 and fed directly to the third operation stage. The PVC particles are collected from bottom of tank 530 and fed to fourth dispersion mixer 545 wherein agglomerates are severed and broken apart and fed to generally the middle of fourth hydrogravity separation tank 540. The fourth and last tank once again permits any remaining polyethylene and nylon particles to be directly fed to the third operation stage. The PVC thermoplastic polymers which are collected from the bottom of fourth separation tank 540 are washed and dried in any conventional manner as a fluid bed, a screen, or a centrifuge 550, with the above noted Gala spin dryer being preferred. The PVC component particles are then bagged, etc. and placed in storage unit 560 for subsequent reuse and/or sale. The aqueous solution from dryer 550 is then recycled desirably to first hydrogravity tank 510.

In the third unit operation or stage, the thermoplastic components of nylon and polyethylene particles from the second unit operation are fed to first dispersion mixer 615 and then to hydrogravity separation tank 610. As with the prior two purification operations, the component which is desired to be cleaned or purified is recycled to a second dispersion mixer and tank, then to a third dispersion mixer and tank, and then to a fourth dispersion mixer and hydrogravity separation tank. Multiple stages of hydrogravity separation improve product purity. The remaining thermoplastic polyethylene component can be directly collected and dried as for reuse and/or resale. Alternatively, the polyethylene can be subjected to a plurality of a combination of a mixer and hydrogravity tank (i.e. a fourth stage) to improve the purity thereof. Once again, with respect to the overall system and process of the third and/or optional fourth units of operation, the concepts, principles, structures, and description as set forth hereinabove with regard to the mixers, the hydrogravity tanks, and the like are hereby fully incorporated by reference and hence will not be repeated.

Thus, by way of quick summary, the feed stream from the end of the second operation stage is fed to first dispersion mixer 615 wherein any agglomerated particles are substantially broken apart with the slurry then being fed to first hydrogravity separation tank 610 wherein the heavier nylon particles settle to the bottom of the tank and are collected, washed, and directly fed to nylon dryer 650. The specific gravity of the aqueous solution of all of the tanks of the third stage operation are all essentially the same and are all slightly less than the specific gravity of nylon and hence is approximately 1.0. Thus, as with the first and second operation stages, if any or a small amount of a thermoplastic component is contained with the heaviest component or an agglomerated particle containing more than one domain, it will float to the top whereupon it is de-agglomerated and fed to a subsequent tank, and so forth until all of the heaviest component has been removed therefrom. Accordingly, the particles which float to the top of first tank 610 are fed to second mixer 625 where agglomerated particles are broken apart, added to second hydrogravity separation tank 620 with the nylon collected from the bottom thereof and fed directly to nylon dryer 650 and the remaining floating polyethylene particles fed to third mixer 635. The process is once again repeated purifying the polyethylene particles by collecting the heavy nylon particles from the bottom of tank 630 and further breaking any agglomerated floating particles by feeding them to mixer 645. Finally, any remaining nylon particles are collected from the bottom of tank 640, washed, and dried in nylon dryer 650 with the remaining particles which float being purified polyethylene particles which are washed, and fed to polyethylene dryer 660. Both nylon dryer 650 and polyethylene dryer 660, as before, can be any conventional dryer such as a centrifuge dryer, vibrating screen with a spin dryer such as a Gala dryer being preferred. The separate dried nylon particles can be collected in storage unit 670 for subsequent use and/or sale. The polyethylene particles can also be dried and placed in storage unit 680 for subsequent use and/or sale. As before, the collected aqueous solution from dryers 650 and 660 are recycled to hydrogravity 610 to replenish the aqueous solution thereof.

With regard to any unit operation concerning separation of particles and preferably only particles of one feed stock component, the particles can be collected and stored as shown in FIG. 1. Alternatively, either before or after storage they can be fed to a suitable melt mixing device such as an extruder, and subsequently pelletized for use as such. Melt mixing devices and various extruders, melt filters, and pelletizers are well known to the art and to the literature.

The above described system and process will be better understood by reference to the following example which serves to illustrate but not to limit the present invention.

With respect to reclamation of a copper cable containing 453 kg (1,000 lbs.) by weight of feedstock, and according to the format generally described hereinabove and shown in FIG. 1, 451 kg (995 lbs.) of feed stock was obtained from granulator 120 with the remaining 2 kg (5 lbs.) being recovered as fines. Depending upon the amount of wire in the cable feedstock, the amount of copper recovered from first operation stage 400 can range from about 10 lbs. to about 150 lbs. with the purity of the copper being generally at least about 80%, at least about 90%, or at least about 95% by weight, and preferably at least about 98% or at least about 99% by weight. The recovery of the PVC from the second operation stage 500 can range from about 340 kg (750) to about 442 kg (975 lbs.) with the purity of the PVC being at least about 85% to at least about 90% or, desirably at least 95% by weight, and preferably at least about 98% or at least about 99% by weight of the total weight of the collected PVC stream.

The amount of the nylon and polyethylene being recovered from the third operation stage 600 each can independently vary from about 2.3 kg (5 lbs.) to about 45.3 kg (100 lbs.) based upon the total weight of both components with the purity of each component being at least 85% or at least about 90% by weight, desirably at least about 95% by weight, and preferably at least about 98% or at least about 99% by weight.

Generally, the system and process of the present invention readily recovers at least about 95%, desirably at least about 98%, and preferably at least about 99% by weight of the initial feedstock.

If desired, each of the above reclaimed component particles of copper, PVC, polyethylene, and nylon can be further purified by other methods known to the art and to the literature if so desired.

While the above invention has been described with regard to a copper cable feed stock, it is understood that generally any type of solid feed stocks containing separate domains which are not melt blended, can be utilized including feedstock containing various metals such as aluminum cable, etc.

While in accordance with the Patent Statutes, the best mode and preferred embodiments have been set forth, the scope of the invention is not limited thereto, but rather by the scope of the attached claims.

## Claims

1. A process for reclaiming a selected component from a feedstock comprising a plurality of components, each component having a different specific gravity, comprising the steps of:
a) mixing particles of the feedstock in a first mixer (415);
b) feeding said feedstock particles being mixed to a first hydrogravity tank (410) containing a solution having a specific gravity intermediate to at least one heavier feedstock component and to at least one lighter feedstock component and causing particles of at least one feedstock component to either sink or float ;
c) removing the component particles having the selected specific gravity from said hydrogravity tank (410);
d) mixing the component particles, having the selected specific gravity and being removed from said first hydrogravity tank (410) in a second mixer (425);
e) feeding said component particles, having the selected specific gravity and being removed and mixed to a second hydrogravity separation tank (420) containing a solution having substantially the same specific gravity as said solution in the first hydrogravity tank (410); and
f) removing component particles having the selected specific gravity from said second hydrogravity tank (420).

2. A process according to claim 1, wherein said feedstock comprises at least three components, and wherein said component particles having the selected specific gravity are substantially of a single feedstock component.

3. A process according to claim 2, wherein each particle comprises substantially a single component, and including mixing said selected component particles from said second hydrogravity tank (420) in a third mixer (435) and feeding said component particles having the selected specific gravity and being mixed to a third hydrogravity separation tank (430) containing a solution having substantially the same specific gravity as said solution in said first hydrogravity tank (410).

4. A process according to any of claims 1 to 3, wherein the number of separation tanks is from about 2 to about 8, with a mixer exists before each said hydrogravity separation tanks; wherein said feedstock component particles are fed into the side of each said hydrogravity separation tank, , wherein the specific gravity of said at least one different feedstock component particles is at least 0.1 specific gravity units different than the specific gravity solution in each said tank, and wherein each said hydrogravity solution is substantially free of a phosphorus containing compound.

5. A process according to any one of claims 1 to 4, wherein said hydrogravity solution is an aqueous solution.

6. A process according to any one of claims 1 to 5, wherein each said mixer (300) has at least one substantially axial flow zone (335) and at least one substantially radial flow zone (345).

7. A process according to any one of claims 1 to 6, wherein said feedstock comprises at least three different feedstock components including at least one plastic component and at least one metal component, or at least three different plastic components, or at least two different plastic components and a wood component, or at least two different plastic components and a cellulose component.

8. A process according to any one of claims 1 to 7, including purifying said non-selected specific gravity feedstock component particles by feeding said non-selected particles to at least one of a tandem processing unit comprising a mixer (515; 615) and a subsequent hydrogravity tank (510; 610) having an aqueous solution of a specific gravity such that one of said remaining non-selected specific gravity feedstock component particles is separated.

9. A process as claimed in any of claims 1 to 8, wherein said first hydrogravity separation tank (410) having substantially a phosphorus- free aqueous solution of a specific gravity greater or less than the specific gravity of at least one component of said feedstock particles ; removing component particles having either a lighter specific gravity or a heavier specific gravity than the specific gravity of said aqueous solution; subsequently feeding said selected component particles with lighter or heavier gravity to said second hydrogravity separation tank (420) having substantially the same specific gravity of said substantially phosphorus-free aqueous solution as said first tank; and purifying said selected removed component particles by separating said selected component particles with lighter or heavier gravity from component particles of said feedstock having any other different specific gravity.

10. A process as claimed in claim 5 or 9, wherein the amount of any phosphorus containing salt is less than about 3% by weight of said aqueous solution.

11. A process according to claim 8, claims 8 and 9 or claims 8 and 10, wherein said aqueous solution comprises a salt of an alkali metal, an alkaline earth metal, a transition metal from groups 3 through 15 of the Periodic Table other than phosphorus, and an anion comprising a halogen, oxygen or an oxygen-containing compound, hydroxide, carbonate, a nitrogen-containing compound, or a sulfur- containing compound; or wherein said aqueous solution is a drilling fluid, or a completion fluid, or an aqueous suspension.

12. A process for reclaiming particles according to claim 11, using mixers (300) having at least two substantially axial flow zones (335, 365) and at least two substantially radial flow zones (345, 355).

13. A process according to any of claims 1 to 12, **characterized in** using a hydrogravity aqueous solution comprising potassium carbonate, zinc chloride, ferric chloride, ferrous chloride, calcium chloride, calcium bromide, calcium sulfate, zinc chloride, zinc bromide, zinc sulfate, zinc oxide, sodium hydroxide, sodium zincate, magnesium chloride, or a polytungstate complex, or mixtures thereof, or in using a hydrogravity aqueous solution comprising a salt containing an electropositive component, preferably calcium, and an electronegative component, preferably chloride or nitrate.

14. A process according to any of the claims 1 to 13, wherein the hydrogravity tanks (410; 510; 610) are quiescent tanks having a non turbulent flow rate and/or are not agitated, stirred or mixed.

15. A system for reclaiming particles of a ground feedstock comprising:
a) a first set (400) of at least one mixer (415) and a plurality of hydrogravity separation tanks (410; 420, 430) each containing a substantially phosphorus-free aqueous solution having substantially the same specific gravity for separating particles of one component of said ground feedstock containing at least three different components, each aqueous solution having a specific gravity which is either greater or less than the particles of a single selected component of said feedstock components, each said feedstock component having a different specific gravity; said mixer (415) being located at least before one of said hydrogravity separation tanks (410, 420, 430) for mixing said particles of said feedstock components before said components are fed to said at least one hydrogravity separation tank (410, 420, 430),
b) a second set (500) of at least one mixer (515) and a plurality of hydrogravity separation tanks (510; 520, 530) for further separating a single selected remaining component of said feedstock components, said at least one mixer (515) of said second set (500) being located before at least one of said second set of hydrogravity separation tanks (510; 520, 530) for mixing said particles of said feedstock components before they are fed to at least one of said second set hydrogravity separation tanks (510; 520; 530), each said second set tank (510, 520, 530) having a substantially phosphorus- free aqueous solution of substantially the same specific gravity but which is different than the specific gravity of said first aqueous solution within the first hydrogravity separation tanks (410; 420; 430), and is greater or less than only said single selected remaining component of said feedstock so that said second set aqueous solution is capable of separating said second selected component from the remaining feedstock components.

16. A system according to claim 15, wherein in each said set (400, 500) of said mixers (415, 425; 515, 525) and said tanks (420, 430; 520, 530), independently, the number of mixers and mixing tanks is each from about 3 to about 10.

17. A system according to claim 15 or 16, wherein said solution, independently, in each said set (400, 500) of hydrogravity separation tanks (410, 420; 510, 520) is a phosphorus free compound comprising a salt of an alkali metal, an alkaline earth metal, a transition metal from groups 3 through 15 other than phosphorus of the Periodic Table, and an anion comprising a halogen, oxygen or an oxygen-containing compound, hydroxide, carbonate, a nitrogen-containing compound, or a sulfur-containing compound; or wherein said aqueous solution is a drilling fluid, or a completion fluid, or a suspension.

18. A system according to any one of claims 15 to 17, including in each set (400, 500, 600) a mixer (415; 515; 615) before each hydrogravity separation tank (410; 510; 610), and wherein, independently, the number of mixers (415, 425; 515, 525; 615, 625) and tanks (410, 420; 510, 520; 610, 620) in each said set (400, 500, 600) is at least two, and wherein the amount of any phosphorus containing compound is less than about 3% by weight of said aqueous solution of said first set (400) and said second set (500).

19. A system according to any of claims 15 to 18, wherein said feedstock comprises a total of at least three different feedstock components comprising at least one plastic component and at least one metal component, or at least three different plastic components, or at least two different plastic components and a wood component, or at least two different plastic components and a cellulose component.

20. A system according to any of claims 15 to 19, wherein an aqueous solution comprises potassium carbonate, zinc chloride, ferric chloride, ferrous chloride, calcium chloride, calcium bromide, calcium sulfate, zinc chloride, zinc bromide, zinc sulfate, zinc oxide, sodium hydroxide, sodium zincate, magnesium chloride, or a polytungstate complex, or mixtures thereof, or an aqueous solution comprises a salt containing an electropositive component, preferably calcium, and an electronegative component, preferably chloride or nitrate.

21. A system according to any of the claims 15 to 20, wherein the hydrogravity tanks (410; 510; 610) are quiescent tanks having a non turbulent flow rate and/or are not agitated, stirred or mixed.

## Patentansprüche

1. Verfahren zum Rückgewinnen einer ausgewählten Komponente von einem Einsatzmaterial, das eine Vielzahl von Komponenten umfasst, wobei jede Komponente ein unterschiedliches spezifisches Gewicht hat, umfassend die folgenden Schritte:
a) das Mischen von Partikeln des Einsatzmaterials in einem ersten Mischer (415);
b) das Einspeisen der Einsatzmaterialpartikel, die gemischt worden sind, in einen ersten Hydroschwerkrafttank (410), der eine Lösung mit einem spezifischen Gewicht enthält, das zwischen mindestens einer schwereren Einsatzmaterialkomponente und mindestens einer leichteren Einsatzmaterialkomponente liegt, und Partikel von mindestens einer Einsatzmaterialkomponente entweder absinken oder schweben lässt;
c) das Entfernen der Komponentenpartikel mit dem gewählten spezifischen Gewicht vom dem Hydroschwerkrafttank (410);
d) das Mischen der Komponentenpartikel, welche das gewählte spezifische Gewicht aufweisen und welche von dem ersten Hydroschwerkrafttank (410) entfernt wurden, in einem zweiten Mischer (425);
e) das Einspeisen der Komponentenpartikel, die das gewählte spezifische Gewicht aufweisen und die entfernt und gemischt worden sind, in einen zweiten Hydroschwerkraft-Trennungstank (420), der eine Lösung enthält, welche im Wesentlichen das gleiche spezifische Gewicht wie die Lösung in dem ersten Hydroschwerkrafttank (410) aufweist; und
f) das Entfernen von Komponentenpartikel mit dem gewählten spezifischen Gewicht von dem zweiten Hydroschwerkrafttank (420).

2. Verfahren gemäß Anspruch 1, wobei das Einsatzmaterial mindestens drei Komponenten umfasst, und wobei die Komponentenpartikel mit dem gewählten spezifischen Gewicht im Wesentlichen aus einer einzelnen Einsatzmaterialkomponente sind.

3. Verfahren gemäß Anspruch 2, wobei jeder Partikel im Wesentlichen eine einzelne Komponente umfasst, und welches das Mischen der gewählten Komponentenpartikel von dem zweiten Hydroschwerkrafttank (420) in einem dritten Mischer (435) und das Einspeisen der Komponentenpartikel, die das gewählte spezifische Gewicht aufweisen und gemischt worden sind, in einen dritten Hydroschwerkraft-Trennungstank (430), der eine Lösung enthält, welche im Wesentlichen das gleiche spezifische Gewicht wie die Lösung in dem ersten Hydroschwerkrafttank (410) aufweist, umfasst.

4. Verfahren gemäß einem der Ansprüche 1 bis 3, wobei die Anzahl an Trennungstanks bei etwa 2 bis etwa 8 liegt, wobei sich ein Mischer vor jedem der Hydroschwerkraft-Trennungstanks befindet; wobei die Einsatzmaterial-Komponentenpartikel in die Seite jedes Hydroschwerkraft-Trennungstanks eingespeist werden, wobei sich das spezifische Gewicht von den mindestens einen unterschiedlichen Einsatzmaterial-Komponentenpartikeln um mindestens 0,1 Einheiten des spezifischen Gewichts gegenüber dem spezifischen Gewicht der Lösung in jedem von den Tanks unterscheidet, und wobei jede der Hydroschwerkraftlösungen im Wesentlichen frei von einer Phosphor enthaltenden Verbindung ist.

5. Verfahren gemäß einem der Ansprüche 1 bis 4, wobei die Hydroschwerkraftlösung eine wässrige Lösung ist.

6. Verfahren gemäß einem der Ansprüche 1 bis 5, wobei jeder Mischer (300) mindestens eine im Wesentlichen axiale Fließzone (335) und mindestens eine im Wesentlichen radiale Fließzone (345) aufweist.

7. Verfahren gemäß einem der Ansprüche 1 bis 6, wobei das Einsatzmaterial mindestens drei unterschiedliche Einsatzmaterialkomponenten umfasst, einschließend mindestens eine Kunststoffkomponente und mindestens eine Metallkomponente, oder mindestens drei unterschiedliche Kunststoffkomponenten, oder mindestens zwei unterschiedliche Kunststoffkomponenten und eine Holzkomponente, oder mindestens zwei unterschiedliche Kunststoffkomponenten und eine Cellulosekomponente.

8. Verfahren gemäß einem der Ansprüche 1 bis 7, welches das Reinigen der nicht-gewählten Einsatzmaterial-Komponentenpartikel mit spezifischem Gewicht einschließt, indem die nicht-gewählten Partikel in mindestens eine Tandem-Verarbeitungseinheit, die einen Mischer (515; 615) und einen nachgeschalteten Hydroschwerkrafttank (510; 610) mit einer wässrigen Lösung mit einem spezifischen Gewicht umfasst, eingespeist werden, so dass einer der verbleibenden nicht-gewählten Einsatzmaterial-Komponentenpartikel mit spezifischem Gewicht abgetrennt wird.

9. Verfahren, wie in einem der Ansprüche 1 bis 8 beansprucht, wobei der erste Hydroschwerkraft-Trennungstank (410) eine im Wesentlichen phosphorfreie wässrige Lösung mit einem spezifischen Gewicht, das größer oder geringer als das spezifische Gewicht von mindestens einer Komponente der Einsatzmaterialpartikelist aufweist; Entfernen von Komponentenpartikeln mit entweder einem geringeren spezifischen Gewicht oder einem höheren spezifischen Gewicht als dem spezifischen Gewicht der wässrigen Lösung; anschließendes Einspeisen der gewählten Komponentenpartikel mit geringerem oder höherem Gewicht in den zweiten Hydroschwerkraft-Trennungstank (420) mit im Wesentlichen dem gleichen spezifischen Gewicht von der im Wesentlichen phosphorfreien wässrigen Lösung wie dem ersten Tank; und Reinigen der gewählten entfernten Komponentenpartikel durch Abtrennen der gewählten Komponentenpartikel mit geringerem oder höherem Gewicht von Komponentenpartikeln des Einsatzmaterials mit einem beliebigen anderen spezifischen Gewicht.

10. Verfahren, wie in Anspruch 5 oder 9 beansprucht, wobei die Menge an beliebigem Phosphor enthaltenden Salz geringer als etwa 3 Ges.-% der wässrigen Lösung ist.

11. Verfahren gemäß Anspruch 8, Anspruch 8 und 9 oder Anspruch 8 und 10, wobei die wässrige Lösung ein Salz eines Alkalimetalls, eines Erdalkalimetalls, eines Übergangsmetalls von den Gruppen 3 bis 15 des Periodensystems der Elemente, außer Phosphor, und eines Anions, umfassend Halogen, Sauerstoff oder eine sauerstoffhaltige Verbindung, Hydroxid, Carbonat, eine stickstoffhaltige Verbindung oder eine schwefelhaltige Verbindung, umfasst; oder wobei die wässrige Lösung ein Bohrfluid, oder ein Komplettierungsfluid oder eine wässrige Suspension ist.

12. Verfahren zur Rückgewinnung von Partikeln gemäß Anspruch 11 unter Verwendung von Mischern (300) mit mindestens zwei im Wesentlichen axialen Fließzonen (335, 365) und mindestens zwei im Wesentlichen radialen Fließzonen (345, 355).

13. Verfahren gemäß einem der Ansprüche 1 bis 12, **dadurch gekennzeichnet, dass** eine wässrige Hydroschwerkraftlösung verwendet wird, die Kaliumcarbonat, Zinkchlorid, Eisen(III)-chlorid, Eisen(II)-chlorid, Calciumchlorid, Calciumbromid, Calciumsulfat, Zinkchlorid, Zinkbromid, Zinksulfat, Zinkoxid, Natriumhydroxid, Natriumzinkat, Magnesiumchlorid oder ein Polywolframatkomplex oder Mischungen davon umfasst, oder das eine wässrige Hydroschwerkraftlösung verwendet wird, die ein Salz, welches eine elektropositive Komponente, vorzugsweise Calcium, und eine elektronegative Komponente, vorzugsweise Chlorid oder Nitrat, enthält, umfasst.

14. Verfahren gemäß einem der Ansprüche 1 bis 13, wobei die Hydroschwerkrafttanks (410; 510; 610) Ruhetanks mit einer nicht-turbulenten Fließrate sind und/oder nicht bewegt, gerührt oder gemischt werden.

15. System zur Rückgewinnung von Partikeln eines gemahlenen bzw. zerkleinerten Einsatzmaterials, umfassend:
(a) Einen ersten Satz (400) von mindestens einem Mischer (415) und einer Vielzahl von Hydroschwerkraft-Trennungstanks (410, 420, 430), wobei jeder eine im Wesentlichen phosphorfreie wässrige Lösung mit im Wesentlichen dem gleichen spezifischen Gewicht für die Abtrennung von Partikeln von einer Komponente des gemahlenen Einsatzmaterials, das mindestens drei unterschiedliche Komponenten enthält, enthält, wobei jede wässrige Lösung ein spezifisches Gewicht aufweist, welches entweder größer oder geringer als jenes der Partikel einer einzelnen gewählten Komponente der Einsatzmaterialkomponenten ist, wobei jede der Einsatzmaterialkomponenten ein unterschiedliches spezifisches Gewicht besitzen; wobei der Mischer (415) mindestens vor einem der Hydroschwerkraft-Trennungstanks (410, 420, 430) für das Mischen der Partikel der Einsatzmaterialkomponenten lokalisiert ist, bevor die Komponenten zu dem mindestens einen Hydroschwerkraft-Trennungstank (410, 420, 430) gespeist werden,
b) einen zweiten Satz (500) von mindestens einem Mischer (515) und einer Vielzahl von Hydroschwerkraft-Trennungstanks (510, 520, 530) für ein weiteres Abtrennen einer einzelnen gewählten verbleibenden Komponente von den Einsatzmaterialkomponenten, wobei der mindestens eine Mischer (515) von dem zweiten Satz (500) vor mindestens einem von dem zweiten Satz von Schwerkraft-Trennungstanks (510, 520, 530) lokalisiert ist, und zwar zum Mischen der Partikel der Einsatzmaterialkomponenten, bevor sie zu mindestens einem der Hydroschwerkraft-Trennungstanks (510, 520, 530) des zweiten Satzes gespeist werden, wobei jeder der Tanks des zweiten Satzes (510, 520, 530) eine im Wesentlichen phosphorfreie, wässrige Lösung mit im Wesentlichen dem gleichen spezifischen Gewicht aufweist, sich jedoch von dem spezifischen Gewicht der ersten wässrigen Lösung innerhalb der ersten Schwerkraft-Trennungstanks (410, 420, 430) unterscheidet und größer oder geringer als nur die einzelne gewählte verbleibende Komponente des Einsatzmaterials ist, so dass die wässrige Lösung des zweiten Satzes in der Lage ist, die zweite gewählte Komponente von den verbleibenden Einsatzmaterialkomponenten zu trennen.

16. System gemäß Anspruch 15, wobei in jedem Satz (400, 500) der Mischer (415, 425; 515, 525) und der Tanks (420, 430; 520, 530) unabhängig die Zahl von Mischern und Mischtanks jeweils etwa 3 bis etwa 10 beträgt.

17. System gemäß Anspruch 15 oder 16, wobei die Lösung unabhängig in jedem Satz (400, 500) von Hydroschwerkraft-Trennungstanks (410, 420; 510, 520) eine phosphorfreie Verbindung ist, die ein Salz eines Alkalimetalls, eines Erdalkalimetalls, eines Übergangsmetalls der Gruppen 3 bis 15, außer Phosphor, des Periodensystems der Elemente, und eines Anions, umfassend ein Halogen, Sauerstoff oder eine sauerstoffhaltige Verbindung, Hydroxid, Carbonat, eine stickstoffhaltige Verbindung oder eine schwefelhaltige Verbindung, umfasst; oder wobei die wässrige Lösung ein Bohrfluid, oder ein Komplettierungsfluid oder eine Suspension ist.

18. System gemäß einem der Ansprüche 15 bis 17, das in jedem Satz (400, 500, 600) einen Mischer (415; 515; 615) vor jedem Hydroschwerkraft-Trennungstank (410; 510; 610) einschließt, und wobei unabhängig die Anzahl an Mischern (415, 425; 515, 525; 615, 625) und Tanks (410, 420; 510, 520; 610, 620) in jedem der Sätze (400, 500, 600) mindestens zwei beträgt, und wobei die Menge an einer beliebigen Phosphor enthaltenden Verbindung geringer als etwa 3 Gew.-% der wässrigen Lösung des ersten Satzes (400) und des zweiten Satzes (500) ist.

19. System gemäß einem der Ansprüche 15 bis 18, wobei das Einsatzmaterial insgesamt mindestens drei unterschiedliche Einsatzmaterialkomponenten umfasst, die mindestens eine Kunststoffkomponente und mindestens eine Metallkomponente, oder mindestens drei unterschiedliche Kunststoffkomponenten, oder mindestens zwei unterschiedliche Kunststoffkomponenten und eine Holzkomponente, oder mindestens zwei unterschiedliche Kunststoffkomponenten und eine Cellulosekomponente umfassen.

20. System gemäß einem der Ansprüche 15 bis 19, wobei eine wässrige Lösung Kaliumcarbonat, Zinkchlorid, Eisen(III)-chlorid, Eisen(II)-chlorid, Calciumchlorid, Calciumbromid, Calciumsulfat, Zinkchlorid, Zinkbromid, Zinksulfat, Zinkoxid, Natriumhydroxid, Natriumzinkat, Magnesiumchlorid oder ein Polywolframatkomplex oder Mischungen davon umfasst, oder eine wässrige Lösung ein Salz, welches eine elektropositive Komponente, vorzugsweise Calcium, und eine elektronegative Komponente, vorzugsweise Chlorid oder Nitrat, umfasst.

21. System gemäß einem der Ansprüche 15 bis 20, wobei die Hydroschwerkrafttanks (410; 510; 610) Ruhetanks mit einer nichtturbulenten Fließrate sind und/oder nicht bewegt, gerührt oder gemischt werden.

## Revendications

1. Procédé de revalorisation d'un constituant sélectionné parmi une charge d'alimentation comprenant une pluralité de constituants, chaque constituant étant de densité différente, comprenant les étapes consistant à :
a) mélanger des particules de la charge d'alimentation dans un premier mélangeur (415) ;
b) amener lesdites particules de charge d'alimentation mélangées dans une première cuve à hydrogravité (410) contenant une solution dont la densité est intermédiaire entre au moins un constituant de charge d'alimentation plus lourd et au moins un constituant de charge d'alimentation plus léger et faire couler ou bien flotter les particules d'au moins un constituant de charge d'alimentation ;
c) retirer les particules de constituant ayant la densité sélectionnée de ladite cuve à hydrogravité (410) ;
d) mélanger les particules de constituant, ayant la densité sélectionnée et retirées de ladite première cuve à hydrogravité (410), dans un deuxième mélangeur (425) ;
e) amener lesdites particules de constituant, ayant la densité sélectionnée et retirées et mélangées, dans une deuxième cuve de séparation par hydrogravité (420) contenant une solution ayant essentiellement la même densité que ladite solution dans la première cuve à hydrogravité (410) ; et
f) retirer les particules de constituant ayant la densité sélectionnée de ladite deuxième cuve à hydrogravité (420).

2. Procédé selon la revendication 1, dans lequel ladite charge d'alimentation comprend au moins trois constituants, et dans lequel lesdites particules de constituant ayant la densité sélectionnée se composent essentiellement d'un seul constituant de charge d'alimentation.

3. Procédé selon la revendication 2, dans lequel chaque particule comprend essentiellement un seul constituant, et consistant à mélanger lesdites particules de constituant sélectionné de ladite deuxième cuve à hydrogravité (420) dans un troisième mélangeur (435) et à amener lesdites particules de constituant, ayant la densité sélectionnée et mélangées, dans une troisième cuve de séparation par hydrogravité (430) contenant une solution ayant essentiellement la même densité que ladite solution dans ladite première cuve à hydrogravité (410).

4. Procédé selon l'une quelconque des revendications 1 à 3, dans lequel le nombre de cuves de séparation est d'environ 2 à environ 8, avec la présence d'un mélangeur avant chacune desdites cuves de séparation par hydrogravité ; dans lequel lesdites particules de constituant de charge d'alimentation sont amenées dans le côté de chacune desdites cuves de séparation par hydrogravité, dans lequel la densité des particules desdits au moins un constituant de charge d'alimentation différent diffère d'au moins 0,1 unité de densité de la densité de la solution dans chacune desdites cuves, et dans lequel chacune desdites solutions d'hydrogravité est essentiellement exempte de composé contenant du phosphore.

5. Procédé selon l'une quelconque des revendications 1 à 4, dans lequel ladite solution d'hydrogravité est une solution aqueuse.

6. Procédé selon l'une quelconque des revendications 1 à 5, dans lequel chacun desdits mélangeurs (300) possède au moins une zone d'écoulement essentiellement axiale (335) et au moins une zone d'écoulement essentiellement radiale (345).

7. Procédé selon l'une quelconque des revendications 1 à 6, dans lequel ladite charge d'alimentation comprend au moins trois constituants de charge d'alimentation différents et notamment au moins un constituant plastique et au moins un constituant métallique, ou au moins trois constituants plastiques différents ou bien au moins deux constituants plastiques différents et un constituant en bois, ou encore au moins deux constituants plastiques différents et un constituant en cellulose.

8. Procédé selon l'une quelconque des revendications 1 à 7, qui comprend la purification des particules dudit constituant de charge d'alimentation de densité non sélectionné en amenant lesdites particules non sélectionnées dans au moins une unité de traitement en tandem comprenant un mélangeur (515, 615) suivi d'une cuve d'hydrogravité (510, 610) comportant une solution aqueuse de densité permettant de séparer l'une des particules restantes dudit constituant de charge d'alimentation de densité non sélectionnée.

9. Procédé selon l'une quelconque des revendications 1 à 8, dans lequel ladite première cuve de séparation par hydrogravité (410) comporte essentiellement une solution aqueuse sans phosphore de densité inférieure ou égale à la densité d'au moins un constituant desdites particules de charge d'alimentation ; retirer les particules de constituant ayant soit une densité plus légère, soit un densité plus lourde que la densité de ladite solution aqueuse ; amener ensuite les particules dudit constituant sélectionné ayant une densité plus légère ou plus lourde dans ladite deuxième cuve de séparation par hydrogravité (420) ayant essentiellement la même densité de ladite solution aqueuse essentiellement sans phosphore que ladite première cuve ; et purifier les particules dudit constituant sélectionné retirées en séparant les particules dudit constituant sélectionné ayant une densité plus légère ou plus lourde des particules de constituant de ladite charge d'alimentation ayant une autre densité différente, quelle qu'elle soit.

10. Procédé selon la revendication 5 ou 9, dans lequel la quantité de sel contenant du phosphore quel qu'il soit est inférieure à environ 3% en poids de ladite solution aqueuse.

11. Procédé selon la revendication 8, les revendications 8 et 9 ou les revendications 8 et 10, dans lequel ladite solution aqueuse comprend un sel d'un métal alcalin, d'un métal alcalino-terreux, d'un métal de transition des groupes 3 à 15 du tableau périodique autre que le phosphore, et d'un anion comprenant un halogène, un oxygène ou un composé contenant de l'oxygène, un hydroxyde, un carbonate, un composé contenant de l'azote, ou un composé contenant du soufre ; ou dans lequel ladite solution aqueuse est un fluide de forage, ou un fluide de complétion, ou une suspension aqueuse.

12. Procédé de revalorisation de particules selon la revendication 11, employant des mélangeurs (300) comportant au moins deux zones d'écoulement essentiellement axiales (335, 365) et au moins deux zones d'écoulement essentiellement radiales (345, 355).

13. Procédé selon l'une quelconque des revendications 1 à 12, **caractérisé en ce que** l'on utilise une solution aqueuse d'hydrogravité comprenant du carbonate de potassium, du chlorure de zinc, du chlorure ferrique, du chlorure ferreux, du chlorure de calcium, du bromure de calcium, du sulfate de calcium, du chlorure de zinc, du bromure de zinc, du sulfate de zinc, de l'oxyde de zinc, de l'hydroxyde de sodium, du zincate de sodium, du chlorure de magnésium ou un complexe de polytungstate, ou des mélanges de ceux-ci, ou **en ce que** l'on utilise une solution aqueuse d'hydrogravité comprenant un sel contenant un constituant électropositif, de préférence du calcium, et un constituant électronégatif, de préférence un chlorure ou un nitrate.

14. Procédé selon l'une quelconque des revendications 1 à 13, dans lequel les cuves à hydrogravité (410, 510, 610) sont des cuves au repos ayant un écoulement non turbulent et/ou sont non agitées, remuées ou mélangées.

15. Système de revalorisation de particules d'une charge d'alimentation broyée comprenant
a) un premier ensemble (400) d'au moins un mélangeur (415) et d'une pluralité de cuves de séparation par hydrogravité (410, 420, 430) contenant chacune une solution aqueuse essentiellement sans phosphore ayant essentiellement la même densité pour séparer des particules de l'un des constituants de ladite charge d'alimentation broyée contenant au moins trois constituants différents, chaque solution aqueuse ayant une densité supérieure ou inférieure à celle des particules d'un seul constituant sélectionné desdits constituants de charge d'alimentation, chacun desdits constituants de charge d'alimentation étant de densité différente ; ledit mélangeur (415) étant placé au moins avant une desdites cuves de séparation par hydrogravité (410, 420, 430) pour mélanger lesdites particules desdits constituants de charge d'alimentation avant que lesdits constituants soient amenés dans ladite au moins une cuve de séparation par hydrogravité (410, 420, 430),
b) un deuxième ensemble (500) d'au moins un mélangeur (515) et d'une pluralité de cuves de séparation par hydrogravité (510, 520, 530) permettant de séparer davantage un seul constituant restant sélectionné desdits constituants de charge d'alimentation, ledit au moins un mélangeur (515) dudit deuxième ensemble (500) étant placé avant au moins une desdites cuves de séparation par hydrogravité (510, 520, 530) du deuxième ensemble pour mélanger lesdites particules desdits constituants de charge d'alimentation avant qu'ils soient amenés dans au moins une des cuves de séparation par hydrogravité (510, 520, 530) dudit deuxième ensemble, chacune des cuves dudit deuxième ensemble (510, 520, 530) comportant une solution aqueuse essentiellement sans phosphore dont la densité est essentiellement la même mais est différente de la densité de ladite première solution aqueuse à l'intérieur des premières cuves de séparation par hydrogravité (410, 420, 430), et n'est inférieure ou égale qu'à celle dudit seul constituant restant sélectionné de ladite charge d'alimentation de telle sorte que la solution aqueuse dudit deuxième ensemble soit capable de séparer ledit deuxième constituant sélectionné des constituants restants de la charge d'alimentation.

16. Système selon la revendication 15, dans lequel dans chacun desdits ensembles (400, 500) desdits mélangeurs (415, 425 ; 515, 525) et desdites cuves (420, 430 ; 520, 530), indépendamment, le nombre de mélangeurs et de cuves de mélange est respectivement d'environ 3 à environ 10.

17. Système selon la revendication 15 ou 16, dans lequel ladite solution, indépendamment, dans chacun desdits ensembles (400, 500) de cuves de séparation par hydrogravité (410, 420 ; 510, 520) est un composé sans phosphore comprenant un sel d'un métal alcalin, d'un métal alcalino-terreux, d'un métal de transition des groupes 3 à 15 du tableau périodique autre que le phosphore, et d'un anion comprenant un halogène, un oxygène ou un composé contenant de l'oxygène, un hydroxyde, un carbonate, un composé contenant de l'azote, ou un composé contenant du soufre ; ou dans lequel ladite solution aqueuse est un fluide de forage, ou un fluide de complétion, ou une suspension.

18. Système selon l'une quelconque des revendications 15 à 17, comportant dans chaque ensemble (400, 500, 600) un mélangeur (415, 515, 615) avant chaque cuve de séparation par hydrogravité (410, 510, 610), et dans lequel, indépendamment, le nombre de mélangeurs (415, 425 ; 515, 525 ; 615, 625) et de cuves (410, 420 ; 510, 520 ; 610, 620) dans chacun desdits ensemble (400, 500, 600) est d'au moins deux, et dans lequel la quantité de composé contenant du phosphore, quel qu'il soit, est inférieure à environ 3% en poids de ladite solution aqueuse dudit premier ensemble (400) et dudit deuxième ensemble (500).

19. Système selon l'une quelconque des revendications 15 à 18, dans lequel ladite charge d'alimentation comprend un total d'au moins trois constituants de charge d'alimentation différents comprenant au moins un constituant plastique et au moins un constituant métallique, ou au moins trois constituants plastiques différents, ou au moins deux constituants plastiques différents et un constituant en bois, ou au moins deux constituants plastiques différents et un constituant en cellulose.

20. Système selon l'une quelconque des revendications 15 à 19, dans lequel une solution aqueuse comprend du carbonate de potassium, du chlorure de zinc, du chlorure ferrique, du chlorure ferreux, du chlorure de calcium, du bromure de calcium, du sulfate de calcium, du chlorure de zinc, du bromure de zinc, du sulfate de zinc, de l'oxyde de zinc, de l'hydroxyde de sodium, du zincate de sodium, du chlorure de magnésium ou un complexe de polytungstate, ou des mélanges de ceux-ci, ou une solution aqueuse comprend un sel contenant un constituant électropositif, de préférence du calcium, et un constituant électronégatif, de préférence un chlorure ou un nitrate.

21. Système selon l'une quelconque des revendications 15 à 20, dans lequel les cuves à hydrogravité (410, 510, 610) sont des cuves au repos ayant un écoulement non turbulent et/ou sont non agitées, remuées ou mélangées.
